(19) Europäisches Patentamt

European Patent Office

Office européen des brevets

(11) **EP 1 110 014 B1**

(12) **EUROPÄISCHE PATENTSCHRIFT**

(45) Veröffentlichungstag und Bekanntmachung des Hinweises auf die Patenterteilung:
**19.11.2003 Patentblatt 2003/47**

(21) Anmeldenummer: **00952902.5**

(22) Anmeldetag: **04.07.2000**

(51) Int Cl.⁷: **F16H 61/00**

(86) Internationale Anmeldenummer:
**PCT/DE00/02182**

(87) Internationale Veröffentlichungsnummer:
**WO 01/004517 (18.01.2001 Gazette 2001/03)**

(54) **SYSTEM ZUR HYDRAULISCHEN VERSTELLUNG DER ÜBERSETZUNG EINES CVT**

SYSTEM FOR HYDRAULIC TRANSMISSION REGULATION OF A CVT

SYSTEME DE REGLAGE HYDRAULIQUE DE LA TRANSMISSION POUR UNE TRANSMISSION CONTINUE VARIABLE

(84) Benannte Vertragsstaaten:
**BE DE FR GB**

(30) Priorität: **10.07.1999 DE 19932310**
**27.08.1999 DE 19940670**

(43) Veröffentlichungstag der Anmeldung:
**27.06.2001 Patentblatt 2001/26**

(73) Patentinhaber: **ROBERT BOSCH GMBH**
**70442 Stuttgart (DE)**

(72) Erfinder:
• **BOLZ, Martin-Peter**
**D-71720 Oberstenfeld (DE)**
• **LUH, Joachim**
**D-74321 Bietigheim-Bissingen (DE)**

(56) Entgegenhaltungen:
**EP-B- 0 451 887 EP-B- 0 797 742**
**DE-A- 19 649 483 US-A- 4 702 128**
**US-A- 5 257 960**

**Beschreibung**

Stand der Technik

Die Erfindung geht aus von einem System zur Erzeugung eines Signals zur hydraulischen Verstellung der Übersetzung eines in seiner Übersetzung stufenlos verstellbaren Getriebes in einem Kraftfahrzeug mit den Merkmalen des Oberbegriffs des Anspruchs 1, wie bekannt aus der US 5 257 960.

Kontinuierlich verstellbare Fahrzeuggetriebe mit einem Schubgliederband sind beispielsweise bekannt aus der DE 196 49 483 A, der EP 0 451 887 A oder der EP 0 797 742 A. Wie noch in der folgenden Beschreibung ausführlich beschrieben wird, geschieht die Verstellung der Getriebeübersetzung hydraulisch durch die Verstellung eines sogenannten Primärventils. Zur Verstellung der Getriebeübersetzung wird das Primärventil, das beispielsweise als Magnetventil ausgeführt sein kann, mit einem elektrischen Strom beaufschlagt und damit ein bestimmter Hydrauliköldruck an der Primärseite beziehungsweise Antriebsseite des Getriebes eingestellt. In der DE 196 49 483 A wird vorgeschlagen, die Geschwindigkeit der Verstellung der Getriebeübersetzung abhängig von der erfaßten Drehbewegung der Primärseite zu begrenzen.

Die Spannung des Bandes kann mit Hilfe eines Druckbegrenzungsventils an der Sekundärseite beziehungsweise Abtriebsseite des Getriebes eingestellt werden.

Bei einer schnellen Übersetzungsverstellung des Getriebes, beispielsweise während einer starken Verzögerung des Fahrzeugs, wird kurzzeitig sehr viel Öl für die Verstellung der Übersetzung benötigt. Wenn die Hydraulikölpumpe dann nicht einen ausreichenden Ölvolumenstrom bereitstellt, kann der Druck in der sekundären Ölkammer zusammenbrechen, weil das Primärventil einen zu großen Öffnungsquerschnitt eingestellt hat. Infolgedessen kann die Bandspannung zu gering werden und das Schubgliederband rutscht. Dies soll durch die vorliegende Erfindung aufgabengemäß vermieden werden.

Diese Aufgabe wird durch die kennzeichnenden Merkmale des unabhängigen Anspruchs gelöst.

Vorteile der Erfindung

Wie schon erwähnt geht die Erfindung aus von einem System zur Erzeugung eines Signals zur hydraulischen Verstellung der Übersetzung eines in seiner Übersetzung stufenlos verstellbaren Getriebes in einem Kraftfahrzeug. Hierbei ist ein Ventil vorgesehen, das die hydraulische Verbindung von einem einen hydraulischen Druck aufweisenden Druckreservoir zu einer Druckkammer beeinflußt. Die Verstellung der Übersetzung geschieht durch die Ansteuerung wenigstens des Ventils durch das elektrische Signal. Dazu wird das elektrische Signal derart erzeugt, daß es auf maximale und/oder minimale Werte begrenzt wird.

Der Kern der Erfindung besteht in den kennzeichnenden Merkmalen des Anspruchs 1.

Durch die erfindungsgemäße Begrenzung wird sichergestellt, daß trotz der Übersetzungsverstellung eine hinreichende Druckreserve für die Einstellung der Bandspannung zur Verfügung steht. Ein Zusammenbrechen des für die Bandspannung notwendigen Sekundärdrucks, und damit die Gefahr des Rutschens des Umschlingungselements, wird dadurch vermieden. Die Erfindung erlaubt eine schnelle Übersetzungsverstellung, da die Verstellgeschwindigkeit bis an die Grenzen der mit Blick auf eine sichere Bandspannungseinstellung maximal möglichen Verstellung geht.

In einer vorteilhaften Ausgestaltung ist vorgesehen, daß die Einstellung der vorgebbaren Spannung durch die Einstellung des hydraulischen Drucks geschieht. Dabei kann dieser Druck mittels eines Drucksensors erfaßt werden.

Die Einstellung der Bandspannung geschieht insbesondere dadurch, daß der hydraulische Druck auf einen Sollwert eingestellt, insbesondere geregelt, wird. Die erfindungsgemäße Begrenzungen werden dann derart gewählt, daß der hydraulische Druck in jedem Fall auf den Sollwert eingestellt werden kann.

In der Erfindung ist vorgesehen, daß die maximalen und/oder minimalen Werte abhängig von einem Vergleich oder der Differenz zwischen dem hydraulischen Druck und dem zugehörigen Sollwert bestimmt werden. Hierbei können die maximalen und/oder minimalen Werte (Imax, Imin) derart bestimmt werden, daß die hydraulische Verbindung von dem den hydraulischen Druck (Ps,ist) aufweisenden Druckreservoir zu der Druckkammer (12) dann begrenzt wird, wenn der Sollwert (Ps,soll) den hydraulischen Druck (Ps,ist) in einem vorgebbaren Maße übersteigt.

Eine Ausgestaltung der Erfindung zielt auf die, insbesondere von dem Fahrzeugmotor angetriebene, Hydraulikpumpe zur Förderung eines Hydraulikvolumenstromes ab. Hierbei ist vorgesehen, daß

- wenigstens abhängig von dem Betriebszustand der Hydraulikpumpe, insbesondere abhängig von der Drehzahl des Fahrzeugmotors, ein den momentanen Hydraulikvolumenstrom repräsentierender Fördervolumenwert ermittelt wird, und
- wenigstens abhängig von dem Sollwert ein für die Hydrauliköldruckversorgung erforderlicher Hydraulikvolumenstrom ermittelt wird, und
- die maximalen und/oder minimalen Werte abhängig von einem Vergleich oder der Differenz zwischen dem Fördervolumenwert und dem erforderlichen Hydraulikvolumenstrom bestimmt werden.

Bei dieser Ausgestaltung der Erfindung kann vorgesehen sein, daß die Ermittlung des erforderlichen Hydraulikvolumenstromes weiterhin abhängig von einem Vergleich oder der Differenz zwischen dem hydraulischen Druck und dem Sollwert (Ps,soll) getätigt wird. Die Ermittlung des erforderlichen Hydraulikvolumenstroms kann dann mittels eines Kennfeldes geschehen, wobei das Kennfeld durch den Vergleich oder durch die Differenz zwischen dem hydraulischen Druck und dem Sollwert an Toleranzen des Getriebes, wie beispielsweise herstellungs- und/oder alterungsbedingte Toleranzen, angepaßt wird. Die Erfindung erlaubt somit eine schnelle Übersetzungsverstellung, da die Verstellgeschwindigkeit bis an die Grenzen der maximal möglichen Verstellung geht, da Herstellungs- und Alterungstoleranzen nicht im Sinne einer worst-case Betrachtung berücksichtigt werden müssen.

Weitere Ausgestaltungen sind den Unteransprüchen zu entnehmen.

Zeichnung

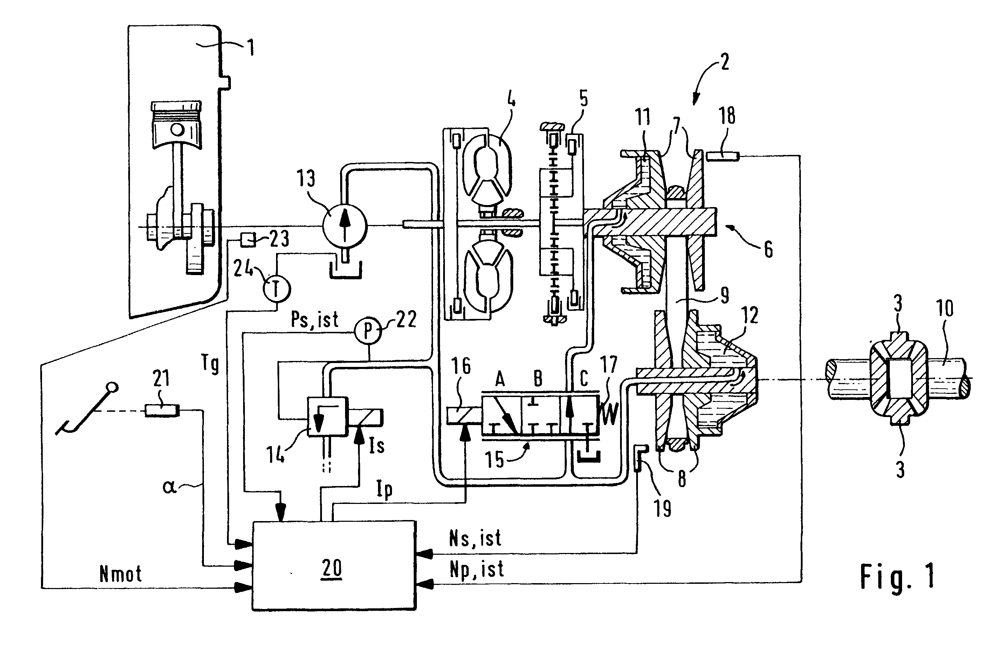

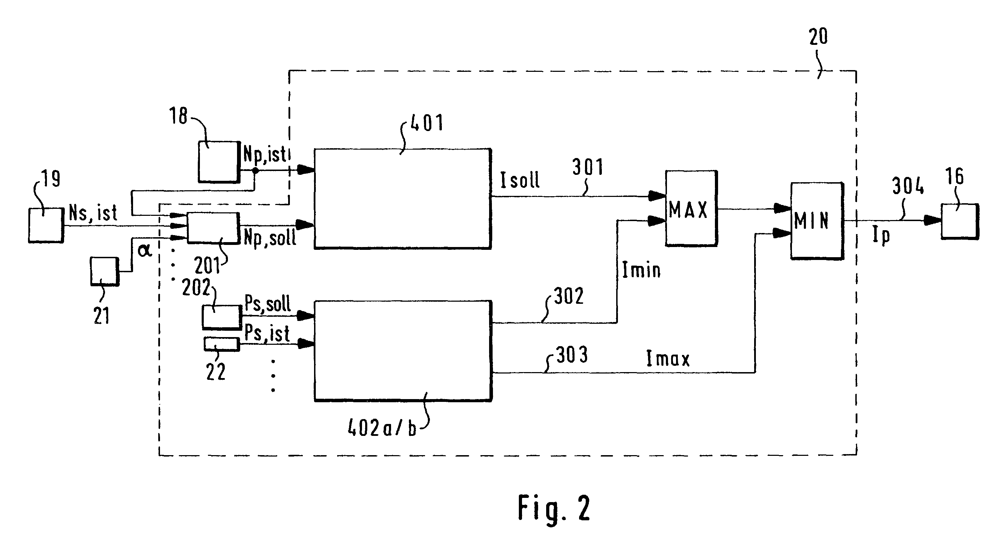

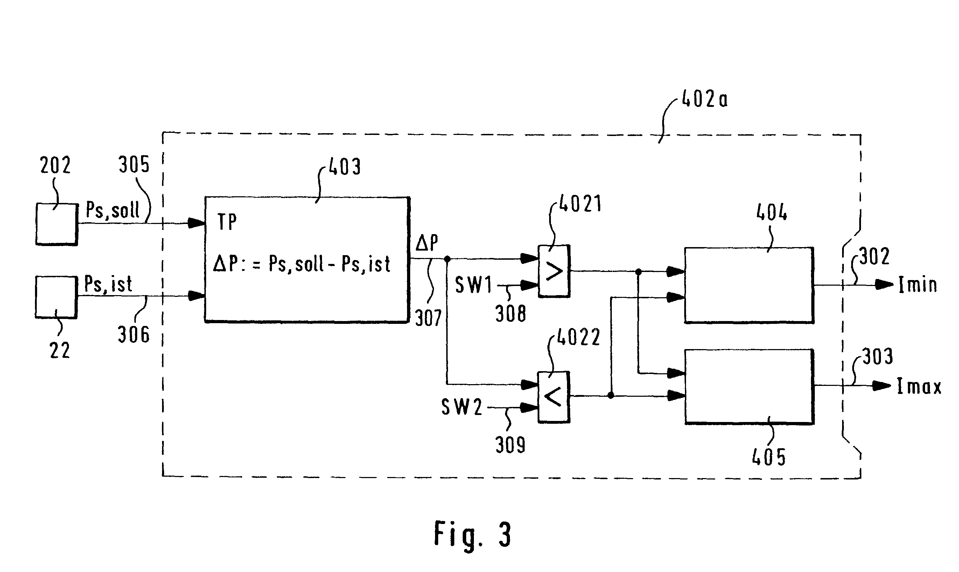

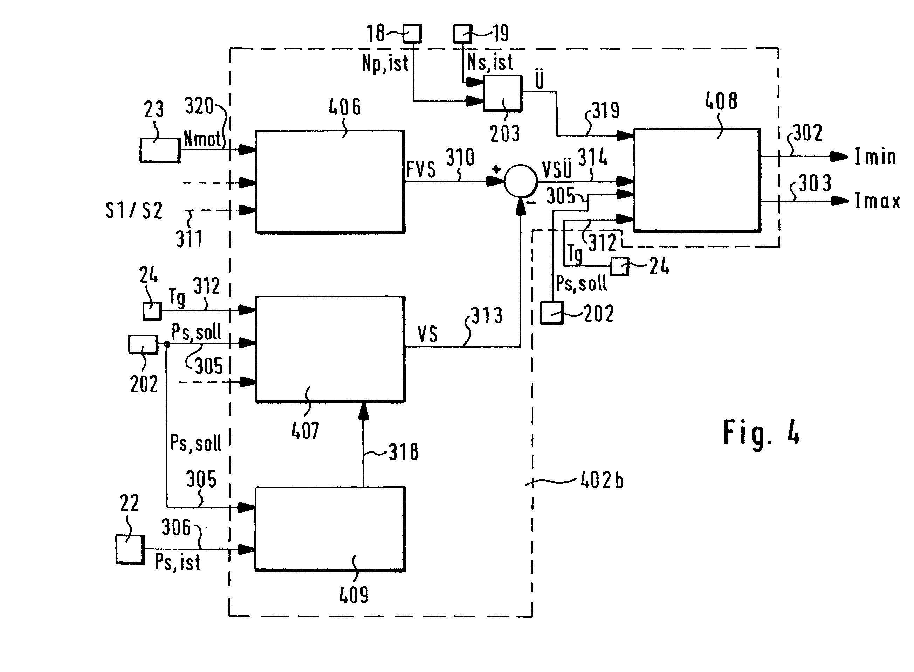

Die Figur 1 zeigt ein Übersichtsbild eines kontinuierlich verstellbaren Getriebes. In der Figur 2 ist ein Blockschaltbild der erfindungsgemäßen Begrenzung in allgemeinerer Form zu sehen, während die Figuren 3 und 4 zwei Varianten der Erfindung darstellen.

Ausführungsbeispiele

Die Erfindung soll im folgenden anhand von Ausführungsbeispielen näher erläutert werden. In der Figur 1 ist dabei mit dem Bezugszeichen 2 ein stufenloses Umschlingungsgetriebe in Kraftfahrzeugen zum Zweck der Kraftübertragung vom Motor 1 zu den Antriebswellen 3 der Räder dargestellt. Ein solches stufenloses Getriebe hat beispielsweise einen Drehmomentwandler 4 und Kupplungen 5 für Vorwärts- und Rückwärtsfahrtumschaltungen, die zwischen dem Motor 1 und dem Variator 6 angeordnet sind. Der Variator 6 besteht aus einem antriebs- (primären) und einem abtriebsseitigen (sekundären) Kegelscheibensatz 7 und 8, wobei mit Hilfe einer Kette oder eines Schubgliederbandes 9 die Kraft von dem Antriebs- 7 zum Abtriebsscheibensatz 8 übertragen wird. Jeder Kegelscheibensatz besteht aus einer axial feststehenden und einer axial beweglichen Scheibe. Durch gleichzeitige Variation der axial beweglichen Scheiben auf dem Antriebs- und dem Abtriebsscheibensatz ändert sich die Übersetzung des Variators 6 von einer hohen Anfahrübersetzung Low zu einer niedrigen Übersetzung Overdrive.

Der Abtriebsscheibensatz ist über ein Ausgleichsgetriebe 10 mit den Antriebswellen 3 der Räder verbunden. Die axial beweglichen Kegelscheiben 7 und 8 sind hydraulisch verstellbar und besitzen dazu die Ölkammern 11 und 12.

Zur Druckö/versorgung besitzt das Getriebe eine Ölpumpe 13, die beispielsweise mit der Drehzahl des Verbrennungsmotors 1 läuft. In einer möglichen Ausführungsform wird die Spannung des Bandes 9 mit Hilfe eines Druckbegrenzungsventils 14 (Sekundärventil) eingestellt, welches den Druck, den Sekundärdruck, in der abtriebsseitigen Ölkammer 12 reguliert. Das Druckbegrenzungsventils 14 wird hierzu von dem Steuergerät 20 mittels des Stromes Is angesteuert.

Die Getriebeübersetzung wird mit Hilfe eines Proportionalventils (Primärventil) 15 an der Primärseite eingestellt. Das Ventil 15 kann beispielsweise als Magnetventil ausgeführt sein. Der Sekundärdruck wird durch den Drucksensor 22 erfaßt und als Signal Ps,ist dem Steuergerät 20 zugeführt.

In dem in der Figur 1 beschriebenen Ausführungsbeispiel wird durch Einstellen eines Stromes Ip in dem Magneten 16 eine Kraft auf den Ventilschieber erzeugt. Durch die am Ventilschieber vorhandene Feder 17 stellt sich eine bestimmte Stellung des Proportionalventils 15 ein. Das bedeutet, daß der Strom Ip durch den Magneten 16 die Stellung des Proportionalventils 15 und damit den Öffnungsquerschnitt des Ventils bestimmt.

Das Primärventil 15 kann in der Stellung A (größerer Ansteuerstrom) Öl aus der antriebsseitigen Ölkammer 11 (primäre Ölkammer) zum Öltank hin ablassen und somit den Druck vermindern, wodurch sich die Übersetzung nach Low verstellt. In der Stellung C (geringerer Ansteuerstrom) fließt Öl in die antriebsseitige Ölkammer 11, wodurch sich die Übersetzung in Richtung Overdrive verändert und der Druck in der antriebsseitigen Ölkammer 11 ansteigt. In der Stellung B des Proportionalventils 15 (Ansteuerstrom weist einen mittleren Wert auf) ist das Ventil geschlossen und die primäre Ölkammer 11 abgedichtet, d. h. es kann nahezu kein Öl aus der Ölkammer 11 zu- oder abfließen. Damit bleibt die Übersetzung des Getriebes, zumindest im wesentlichen, konstant. Das Proportionalventil 15 kann beispielsweise direktgesteuert sein oder durch ein Vorsteuerventil in bekannter Weise angesteuert werden.

Weiterhin existiert ein Sensor 18 zur Ermittelung der Primärdrehzahl Np und ein Sensor 19 zur Ermittelung der Sekundärdrehzahl Ns. Die Primär- und Sekundärsensorsignale Np und Ns werden einem Steuergerät 20 zugeführt, welches den Strom Ip durch den Magneten 16 des Proportionalventils 15 einstellt. Weiterhin ist beispielsweise ein Sensor 21 zur Ermittlung der Stellung α des vom Fahrer betätigbaren Fahrpedals angeschlossen.

Die Getriebe- beziehungsweise Getriebeöltemperatur wird durch den Temperatursensor 24 erfaßt und als Signal Tg dem Steuergerät 20 zugeführt.

Mit dem Strom Is des beispielsweise als Magnetventil ausgeführten Ventils 14 wird der Sekundärdruck in der sekundären Ölkammer 12 eingestellt.

Wie schon eingangs erwähnt wird bei einer schnellen Übersetzungsverstellung des Getriebes kurzzeitig sehr viel Öl für die Verstellung der Primärkegelscheiben benötigt. Dies ist beispielsweise der Fall, wenn während einer starker Verzögerung des Fahrzeugs die Übersetzung sehr schnell in Richtung der Anfahrübersetzung (Low) verstellt wird. Das bedeutet, daß unter Umständen das Primärventil 15 durch einen großen Ansteuerstrom Ip in der Stellung A viel Öl aus der Primärkammer 11 abläßt. Der Abstand zwischen den primären Kegelscheiben vergrößert sich. Zur Einstellung der Anfahrübersetzung wird gleichzeitig der Abstand zwischen den sekundären Kegelscheiben verkleinert. Wenn die Ölpumpe 23 in diesem Fall nicht einen ausreichenden Ölvolumenstrom bereitstellt, kann der Druck in der sekundären Ölkammer 12 zusammenbrechen, weil das Primärventil 15 einen zu großen Öffnungsquerschnitt eingestellt hat. Infolgedessen kann die Bandspannung zu gering werden und das Schubgliederband 9 weist eine übermäßigen Schlupf aus, es rutscht. Dies führt im allgemeinen zu einem übermäßigen Verschleiß beziehungsweise zur Zerstörung des Bandes 9. Dieser Fall soll durch die folgende Steuerung des Primärventils 15 vermieden werden.

In der Figur 2 ist ein Teil des Steuergeräts 20 zu sehen. Für die Einstellung der Getriebeübersetzung Ü ist in der Steuerung 20 ein Berechnungsblock 401 vorgesehen, der durch Vergleich der Soll-Primärdrehzahl Np,soll und Ist-Primärdrehzahl Np,ist ein Sollstromsignal Isoll (301) für das Primärventil 15 berechnet. Die Soll-Primärdrehzahl Np,soll wird dabei in bekannter Weise aus der Fahrpedalstellung $\alpha$ (Sensor 21), der Fahrgeschwindigkeit beziehungsweise Ist-Sekundärdrehzahl Ns,ist (Sensor 19) sowie ggf. weiterer Größen im Block 201 abgeleitet.

Weiterhin ist der Berechnungsblock 402 (in den Varianten 402a und 402b) vorhanden, der einen maximalen Strom Imax (303) und einen minimalen Strom Imin (302) berechnet. Dies geschieht in noch zu beschreibender Weise abhängig von bestimmten Eingangsgrößen.

Das Stromsignal Isoll (301) durch das Primärventil 15 wird auf die minimalen und maximalen Stromsignale Imin und Imax begrenzt zu dem Ansteuersignal Ip (304). Dies geschieht in der in der Figur 2 gezeigten Maximal- und Minmal-Auswahl MAX und MIN dadurch, daß am Ausgangs der Blöcke MAX und MIN der maximale beziehungsweise minimale Wert der Eingangssignale (Isoll und Imin bei MAX und Isoll und Imax bei MIN) anliegt. Das begrenzte Stromsignal Ip wird für die Ansteuerung des Primärventils 15 verwendet.

Zur Berechnung der minimalen und maximalen Stromsignale Imin und Imax (302 und 303) in dem Block 402 werden im folgenden zwei Varianten vorgeschlagen:

Der Kerngedanke der in der Figur 3 gezeigten ersten Variante besteht darin, daß mit dem Signal Ps,ist des Sekundärdrucksensors 22 der Soll-Sekundärdruck Ps,soll mit dem Ist-Sekundärdruck Ps,ist verglichen wird. Der Soll-Sekundärdruck Ps,soll wird im Block 202 in bekannter Weise gebildet. Wie schon erwähnt dient die Druckeinstellung auf der Sekundärseite des Getriebes zur Einstellung der Bandspannung, damit zwischen den Kegelscheiben und dem Band 9 kein wesentlicher Schlupf auftritt. Um den Gesamtwirkungsgrad des Getriebes durch unnötige Energieverluste zu optimieren, darf der Soll-Sekundärdruck Ps,soll im Block 202 jedoch nicht zu hoch eingestellt werden, sondern im Idealfall gerade so, daß zwischen dem Band 9 und den Kegelscheiben kein Schlupf auftritt. Aus diesem Grund wird der Soll-Sekundärdruck Ps,soll im Block 202 im wesentlichen abhängig von dem Getriebeeingangsmoment (Motormoment) gebildet. Die Ermittlung des Soll-Sekundärdruck Ps,soll ist nicht Gegenstand dieser Erfindung; auf Details sei deshalb beispielsweise auf die eingangs erwähnte EP 0 797 742 A verwiesen.

Wenn der Ist-Sekundärdruck Ps,ist für eine gewisse Zeit kleiner als der Soll-Sekundärdruck Ps,soll ist, dann werden die Begrenzungssignale Imin und Imax (302 und 303) für den Primärstrom Isoll solange angepaßt, bis der Ist-Sekundärdruck Ps,ist wieder größer als der Soll-Sekundärdruck Ps,soll ist.

Der Kerngedanke der in der Figur 4 gezeigten zweiten Variante besteht darin, daß die Begrenzungssignale Imin und Imax aus einer Abschätzung des Pumpenfördervolumens und des Ölverbrauchs des Getriebes gewonnen werden, und daß darüber hinaus eine Adaption der Begrenzungssignale durch Vergleich des Ist-Sekundärdrucks Ps,ist mit dem Soll-Sekundärdruck Ps,soll vorhanden ist.

Beide Varianten können auch kombiniert eingesetzt werden.

Zur ersten Variante (Figur 3):

In dem Berechnungsblock 403 werden der Soll-Sekundärdruck Ps,soll (305) der Bandspannungsregelung 202 mit dem Ist-Sekundärdruck Ps,ist (306) des Drucksensors 22 verglichen. Dies geschieht dadurch, daß die Differenz

$$\Delta P' = Ps,soll - Ps,ist$$

gebildet wird. Das Ergebnis $\Delta P'$ wird zur Ausblendung kurzzeitiger Schwankungen tiefpaßgefiltert zu dem Ausgangssignal/Fehlersignal $\Delta P$.

Das so gewonnene Fehlersignal $\Delta P$ (307) nimmt somit positive Werte an, wenn der Ist-Sekundärdruck Ps,ist über eine gewisse Zeit kleiner als der Soll-Sekundärdruck Ps,soll ist. Dies bedeutet, daß der Ist-Druck in der Sekundärkammer 12 nicht ausreicht, um den gewünschten beziehungsweise erforderlichen Soll-Druck zu realisieren. In dem Block 4021 wird der Wert $\Delta P$ mit dem vorgebbaren Schwellenwert SW1 verglichen.

Wenn das Signal $\Delta P$ größer als ein Schwellwert SW1 (308) ist, dann bedeutet dies, daß der momentane Ist-Sekundärdruck nicht hinreichend ist, um einen übermäßigen Bandschlupf zu vermeiden. In Reaktion darauf werden durch eine entsprechende Ansteuerung der Blöcke 404 und 405 folgendes veranlaßt:

- Der minimale Primärstrom Imin (302) wird vergrößert, und
- der maximale Primärstrom Imax (303) wird verringert.

Durch die Verringerung des maximal möglichen Primärstroms Imax wird erreicht, daß durch die begrenzte Öffnung des Primärventils 15 in der Stellung A nur eine begrenzte Ölmenge von der Primärkammer 11 abfließen kann. Damit wird die Geschwindigkeit der Übersetzungsverstellung in Richtung Low (Abstand der primären Kegelscheiben vergrößert sich) begrenzt. Mit der Verstellung in Richtung Low verringert sich auch der Abstand der sekundären Kegelscheiben, was zu einem Absinken des Sekundärdrucks Ps,ist führen kann, falls die Pumpe 13 nicht genug fördert. Mit der Begrenzung des Ansteuerstroms des Primärventils wird also gleichzeitig auch eine Begrenzung der Verstellgeschwindigkeit an der Sekundärseite bewirkt, was wiederum dazu führt, daß ein für die Bandschlupfverhinderung hinreichend großer Anpreßdruck in der Sekundärkammer 12 gewährleistet wird.

Durch die Vergrößerung des minimal möglichen Stromwertes Imin wird die Geschwindigkeit einer gewünschten Verstellung der Getriebeübersetzung in Richtung Overdrive begrenzt. In dem Fall, in dem die Pumpe keine hinreichend große Ölmenge fördert, würde eine schnelle Verstellung in Richtung Overdrive den Sekundärdruck Ps,ist direkt absenken, wodurch die Anpressung des Bandes 9 durch den Sekundärdruck unzureichend werden kann.

Wenn das Signal ΔP (307) kleiner als ein Schwellwert SW2 (309) ist, dann bedeutet dies, daß der momentane Ist-Sekundärdruck hinreichend groß ist, um einen übermäßigen Bandschlupf zu vermeiden. In Reaktion darauf werden durch eine entsprechende Ansteuerung der Blöcke 404 und 405 folgendes veranlaßt:

- Der minimale Primärstrom Imin (302) wird verringert, und
- der maximale Primärstrom Imax (303) wird vergrößert.

Durch die Vergrößerung des maximal möglichen Primärstroms Imax wird erreicht, daß durch die Öffnung des Primärventils 15 in der Stellung A mehr Ölmenge von der Primärkammer 11 abfließen kann. Damit wird die Geschwindigkeit der Übersetzungsverstellung in Richtung Low (Abstand der primären Kegelscheiben vergrößert sich) vergrößert. Durch die Verringerung des minimal möglichen Stromwertes Imin wird die Geschwindigkeit einer gewünschten Verstellung der Getriebeübersetzung in Richtung Overdrive vergrößert. Dies bedeutet, daß dann, wenn das Fördervolumen der Pumpe 13 hinreichend ist, eine gewünschte Verstellung der Getriebeübersetzung mit einer hohen Geschwindigkeit realisiert werden kann.

Mit der Vorgehensweise gemäß der ersten Variante wird also ein Zusammenbrechen des Sekundärdrucks und damit die Gefahr des Rutschens des Umschlingungselements wirksam vermieden. Gleichzeitig erlaubt aber die erfindungsgemäße Steuerung eine schnelle Übersetzungsverstellung, da die Verstellgeschwindigkeit bis an die Grenzen der maximal möglichen Verstellung geht, wenn der Sekundärdruck hinreichend groß ist

Zur zweiten Variante (Figur 4):

In der Figur 4 wird eine zweite Variante der Erfindung dargestellt. In dem vorliegenden Ausführungsbeispiel wird die Pumpe 13 durch den Fahrzeugmotor 1 angetrieben. In dem Berechnungsblock 406 wird aus verschiedenen Signalen, beispielsweise aus der Motordrehzahl Nmot (320) und gegebenenfalls weiteren Signalen, der Fördervolumenstrom FVS (310) der Ölpumpe 13 berechnet. Handelt es sich bei der Pumpe 13 um eine Pumpe, die elektronisch auf verschiedene Fördermengen umschaltbar (Schaltstellungen S1 und S2) ist, so wird bei der Berechnung 406 die zur Zeit eingestellte Schaltstellung S1/S2 zur Ermittlung des Signals FVS herangezogen.

In dem Kennfeldblock 407 wird aus weiteren Signalen, insbesondere einem Temperatursignal Tg (312) für die Getriebetemperatur (Sensor 24), dem Soll-Sekundärdrucksignal Ps,soll (305) und weiteren Signalen, die beispielsweise den Betriebszustand der Kupplungen und der Wandlerkupplung betreffen, ein Ölvolumenstrom VS (313) berechnet, der bei konstanter Übersetzung erforderlich ist, um die Öldruckversorgung des Getriebes zu gewährleisten.

Die Differenz zwischen verfügbarem Pumpenvolumenstrom FVS (310) und dem Ölvolumenstromsignal VS (313) ergibt den Ölvolumenstrom VSÜ (314), der für die Übersetzungsverstellung verwendet werden kann.

Mit Hilfe eines Kennfeldblocks 408 wird aus dem Signal VSÜ (314) der minimale und maximale Primärstrom Imin (302) und Imax (303) berechnet, wobei verschiedene Signale in dem Kennfeldblock 406 verwendet werden, insbesondere die berechnete Übersetzung Ü (319), der Soll-Sekundärdruck Ps,soll (305) und die Getriebetemperatur Tg (312). Die Getriebeübersetzung Ü wird dabei im Block 203 aus dem Ist-Drehzahlen der Primär- und Sekundärseite des Getriebes (Sensoren 18 und 19) ermittelt.

Wird im Block 408 festgestellt, daß Ölvolumenstrom VS (313) nicht hinreichend groß ist, so werden die Maximal- und Minimalwerte Imax und Imin wie in der ersten Variante beschrieben vergrößert beziehungsweise verkleinert, so daß der Druck, der zur Bandschlupfverhinderung erforderlich ist, immer sichergestellt ist.

Im Sinne einer Anpassung der Steuerungsparameter an die Getriebetoleranzen wird das Kennfeld im Block 407 zur Berechnung des Ölvolumenstromsignal VS (313) adaptiert. Die Adaption erfolgt im Block 408 durch Vergleich von Soll-Sekundärdruck Ps,soll und Ist-Sekundärdruck Ps,ist wie bei der ersten Variante durch Bildung der tiefpaßgefilterten Differenz ∆P.

Wenn das Fehlersignal ∆P (307) einen vorgebbaren Schwellenwert überschreitet, dann werden die Parameter 318 des Kennfeldblocks 407 so angepaßt, daß das Ölvolumenstromsignal VS (313) größer wird.

Durch die zweite Variante der Erfindung wird ein Zusammenbrechen des Sekundärdrucks und damit die Gefahr des Rutschens des Umschlingungselements vermieden.

Auch die Steuerung gemäß der zweiten Variante erlaubt eine schnelle Übersetzungsverstellung, da die Verstellgeschwindigkeit bis an die Grenzen der maximal möglichen Verstellung geht. Durch die Adaption im Block 402 müssen Herstellungs- und Alterungstoleranzen nicht wie bisher im Sinne einer worst-case Betrachtung berücksichtigt werden.

**Patentansprüche**

1. System zur Erzeugung eines Signals (Ip) zur hydraulischen Verstellung der Übersetzung eines in seiner Übersetzung stufenlos verstellbaren Getriebes (2) in einem Kraftfahrzeug, wobei

   - ein Ventil (15) vorgesehen ist, das die hydraulische Verbindung von einem einen hydraulischen Druck (Ps,ist) aufweisenden Druckreservoir zu einer Druckkammer (12) beeinflusst und
   - die Verstellung der Übersetzung durch die Ansteuerung wenigstens des Ventils (15) durch das elektrische Signal (Ip) geschieht und
   - das elektrische Signal (Ip) derart erzeugt wird, dass es auf maximale und/oder minimale Werte (Imax, Imin) begrenzt wird und
   - die maximalen und/oder minimalen Werte (Imax, Imin) abhängig von dem hydraulischen Druck (Ps,ist) bestimmt werden
   - der hydraulische Druck (Ps, ist) auf einen vorgebbaren Sollwert (Ps, soll) eingestellt, insbesondere geregelt, werden soll

   **dadurch gekennzeichnet, dass**
   die maximalen und/oder minimalen Werte (Imax, Imin) abhängig von einem Vergleich oder der Differenz zwischen dem hydraulischen Druck (Ps,ist) und dem vorgebbaren Sollwert (Ps,soll) bestimmt werden.

2. System nach Anspruch 1, **dadurch gekennzeichnet, dass** ein Umschlingungsteil (9) eine Antriebsmit einer Abtriebsseite verbindet, Mittel (20, 14) vorgesehen sind, mittels der eine vorgebbare Spannung des Umschlingungsteils (9) eingestellt wird und, daß die Begrenzungen (Imax, Imin) derart gewählt werden, daß die Einstellung der Spannung gewährleistet ist.

3. System nach Anspruch 2, **dadurch gekennzeichnet, daß** die Einstellung der vorgebbaren Spannung durch die Einstellung des hydraulischen Drucks (Ps,ist) geschieht.

4. System nach Anspruch 1 oder 3, **dadurch gekennzeichnet, daß** der Druck (Ps,ist) mittels eines Drucksensors (22) erfaßt wird.

5. System nach Anspruch 3, **dadurch gekennzeichnet, daß** die Begrenzungen (Imax, Imin) derart gewählt werden, daß der hydraulische Druck (Ps,ist) auf den Sollwert (Ps,soll) eingestellt werden kann.

6. System nach Anspruch 1, **dadurch gekennzeichnet, daß** insbesondere vorgesehen ist, daß die maximalen und/oder minimalen Werte (Imax, Imin) derart bestimmt werden, daß die hydraulische Verbindung von dem den hydraulischen Druck (Ps,ist) aufweisenden Druckreservoir zu der Druckkammer (12) dann begrenzt wird, wenn der Sollwert (Ps,soll) den hydraulischen Druck (Ps,ist) in einem vorgebbaren Maße übersteigt.

7. System nach Anspruch 2, **dadurch gekennzeichnet, daß** eine, insbesondere von dem Fahrzeugmotor (1) angetriebene, Hydraulikpumpe (13) zur Förderung eines Hydraulikvolumenstromes vorgesehen ist und

   - wenigstens abhängig von dem Betriebszustand der Hydraulikpumpe (13), insbesondere abhängig von der Drehzahl des Fahrzeugmotors (1), ein den momentanen Hydraulikvolumenstromes repräsentierender Fördervolumenwert (FVS) ermittelt wird, und
   - wenigstens abhängig von dem Sollwert (Ps, soll) ein für die Hydrauliköldruckversorgung erforderlicher Hydraulikvolumenstrom (VS) ermittelt wird, und
   - die maximalen und/oder minimalen Werte (Imax, Imin) abhängig von einem Vergleich oder der Differenz zwischen dem Fördervolumenwert (FVS) und erforderlicher Hydraulikvolumenstrom (VS) bestimmt werden.

8. System nach Anspruch 3 und 7, **dadurch gekennzeichnet, daß** die Ermittlung des erforderlichen Hydraulikvolumenstrom (VS) weiterhin abhängig ist von einem Vergleich oder der Differenz zwischen dem hydraulischen Druck (Ps,ist) und dem Sollwert (Ps,soll) getätigt wird.

9. System nach Anspruch 8, **dadurch gekennzeichnet, daß** die Ermittlung des erforderlichen Hydraulikvolumenstrom (VS) mittels eines Kennfeldes (407) geschieht und das Kennfeld (407) durch den Vergleich oder durch die Differenz zwischen dem hydraulischen Druck (Ps,ist) und dem Sollwert (Ps, soll) an Toleranzen des Getriebes, wie beispielsweise herstellungs- und/oder alterungsbedingte Toleranzen, angepaßt wird.

## Claims

1.  System for generating a signal (Ip) with a hydraulic adjustment in the transmission ratio of a transmission (2) having a continuously adjustable transmission ratio, in a motor vehicle,

    -   a valve (15) being provided, which influences the hydraulic connection from a pressure reservoir having a hydraulic pressure (Ps, act) to a pressure chamber (12), and
    -   the adjustment of the transmission ratio taking place as a result of the actuation of at least the valve (15) by means of the electrical signal (Ip), and
    -   the electrical signal (Ip) being generated in such a way that it is limited to maximum and/or minimum values (Imax, Imin) and
    -   the maximum and/or minimum values (Imax, Imin) being determined as a function of the hydraulic pressure (Ps, act), and
    -   the hydraulic pressure (Ps, act) being intended to be set, in particular regulated, to a predetermined desired value (Ps, des),

    **characterized in that**
    the maximum and/or minimum values (Imax, Imin) are determined as a function of a comparison or the difference between the hydraulic pressure (Ps, act) and the predeterminable desired value (Ps, des).

2.  System according to Claim 1, **characterized in that** a wrap-around part (9) connects a drive side with an output side, and means (20, 14) are provided by means of which a predeterminable tension of the wrap-around part (9) is set, and **in that** the limitations (Imax, Imin) are selected such that the setting of the tension is ensured.

3.  System according to Claim 2, **characterized in that** the setting of the predeterminable tension takes place as a result of the setting of the hydraulic pressure (Ps, act).

4.  System according to Claim 1 or 3, **characterized in that** the pressure (Ps, act) is detected by means of a pressure sensor (22).

5.  System according to Claim 3, **characterized in that** the limitations (Imax, Imin) are selected such that the hydraulic pressure (Ps, act) can be set to the desired value (Ps, des).

6.  System according to Claim 1, **characterized in that** there is provision, in particular, for the maximum and/or minimum values (Imax, Imin) to be determined in such a way that the hydraulic connection from the pressure reservoir having the hydraulic pressure (PS, act) to the pressure chamber (12) is limited when the desired value (Ps, des) exceeds the hydraulic pressure (Ps, act) to a predeterminable extent.

7.  System according to Claim 2, **characterized in that** a hydraulic pump (13) driven, in particular by the vehicle engine (1) is provided for feeding hydraulic volume flow, and

    -   a feed-volume value (FVS) representing the instantaneous hydraulic volume flow is determined at least as a function of the operating state of the hydraulic pump (13), in particular as a function of the rotational speed of the vehicle engine (1), and
    -   a hydraulic volume flow (VS) necessary for the hydraulic-oil pressure supply is determined at least as a function of the desired value (Ps, des), and
    -   the maximum and/or minimum values (Imax, Imin) are determined as a function of a comparison or the difference between the feed-volume value (FVS) and the necessary hydraulic volume flow (VS).

8.  System according to Claims 3 and 7, **characterized in that**, furthermore, the determination of the necessary hydraulic volume flow (VS) is performed as a function of a comparison of the difference between the hydraulic pressure (Ps, act) and the desired value (Ps, des).

9.  System according to Claim 8, **characterized in that** the determination of the necessary hydraulic volume flow (VS) takes place by means of a characteristic diagram (407), and the characteristic diagram (407) is adapted to tolerances of the transmission, such as, for example, production-related and/or ageing-induced tolerances, by means of the comparison or by means of the difference between the hydraulic pressure (Ps, act) and the desired value (Ps, des).

## Revendications

1.  Système de production d'un signal (Ip) pour le réglage hydraulique de la transmission d'une boîte de vitesses à réglage progressif du rapport de transmission (2) dans un véhicule, dans lequel

- il est prévu une vanne (15) qui influence la liaison hydraulique d'un réservoir sous pression présentant une pression hydraulique (Ps, ist) à une chambre de pression (12),
- le réglage du rapport de transmission par la commande au moins de la vanne (15) se fait par le signal électrique (Ip),
- le signal électrique (Ip) est produit de telle sorte qu'il est limité à des valeurs maximales et/ou minimales (Imax, Imin),
- les valeurs maximales et/ou minimales (Imax, Imin) sont déterminées en fonction de la pression hydraulique (Ps,ist), et
- la pression hydraulique (Ps,ist) doit être ajustée à une valeur de consigne (Ps,soll), en particulier réglée,

**caractérisé en ce que**
les valeurs maximales et/ou minimales (Imax, Imin) sont déterminées en fonction d'une comparaison ou de la différence entre la pression hydraulique (Ps, ist) et la valeur de consigne prédéfinie (Ps,soll).

2. Système selon la revendication 1,
**caractérisé en ce qu'**
une pièce de cerclage (9) relie un côté d'entraînement à un côté de sortie, des moyens (20, 14) sont prévus pour ajuster une tension prédéterminée de la pièce de cerclage (9), et les limitations (Imax, Imin) sont choisies de telle sorte que l'ajustement de la tension est assuré.

3. Système selon la revendication 2,
**caractérisé en ce que**
l'ajustement de la tension prédéterminée se fait par l'ajustement de la pression hydraulique (Ps,ist).

4. Système selon la revendication 1 ou 3,
**caractérisé en ce que**
la pression (Ps,ist) est relevée au moyen d'un capteur de pression (22).

5. Système selon la revendication 3,
**caractérisé en ce que**
les limitations (Imax, Imin) sont choisies de telle sorte que la pression hydraulique (Ps,ist) peut être ajustée à la valeur de consigne (Ps,soll).

6. Système selon la revendication 1,
**caractérisé en ce qu'**
il est notamment prévu que les valeurs maximales et/ou minimales (Imax, Imin) sont déterminées de telle sorte que la liaison hydraulique du réservoir sous pression présentant la pression hydraulique (Ps,ist) à la chambre de pression (12) est donc limitée si la valeur de consigne (Ps,soll) dépasse la pression hydraulique (Ps,ist) dans une mesure déterminée.

7. Système selon la revendication 2,
**caractérisé en ce qu'**
une pompe hydraulique (13), en particulier entraînée par le moteur du véhicule (1), est prévue pour le transfert d'un débit volumique hydraulique, et

- une valeur de débit transféré (FVS) représentant le débit volumique hydraulique instantané est déterminée, au moins en fonction de l'état de fonctionnement de la pompe hydraulique (13), particulièrement en fonction de la vitesse du moteur du véhicule (1), et
- un débit volumique hydraulique (VS) nécessaire à l'alimentation en huile hydraulique sous pression est déterminé, au moins en fonction de la valeur de consigne (Ps,soll), et
- les valeurs maximales et/ou minimales (Imax, Imin) sont déterminées en fonction d'une comparaison ou de la différence entre la valeur de débit transféré (FVS) et le débit volumique hydraulique nécessaire (VS).

8. Système selon la revendication 3 et 7,
**caractérisé en ce que**
la détermination du débit volumique hydraulique nécessaire (VS) est effectuée, en fonction, dans une large mesure, d'une comparaison ou de la différence entre la pression hydraulique (Ps,ist) et sa valeur de consigne (Ps,soll),

9. Système selon la revendication 8,
**caractérisé en ce que**
la détermination du débit volumique hydraulique nécessaire (VS) se fait au moyen d'un diagramme caractéristique (407), et le diagramme caractéristique (407) est adapté par la comparaison ou par la différence entre la pression hydraulique (Ps,ist) et sa valeur de consigne (Ps,soll) aux tolérances de la boîte, comme par exemple les tolérances conditionnées par la fabrication et/ou le vieillissement.

EP 1 110 014 B1

1

2

3

3

4

5

6

7

8

9

10

11

12

13

14

15

16

17

18

19

20

21

22

23

24

A  B  C

W

Nmot

Ns,ist

Np,ist

Ps,ist

Tg

Is

Ip

α

T

P

**Fig. 1**

Fig. 2

Fig. 3

EP 1 110 014 B1

Fig. 4

EP 1 110 014 B1